# EUROPEAN PATENT APPLICATION

(11) **EP 2 081 394 A1**
(43) Date of publication of application: **22.07.2009**
(21) Application number: 08715092.6
(22) Date of filing: 25.02.2008
(51) Int. Cl.: H04Q 7/22

(54) **METHOD AND DEVICE FOR IMPLEMENTTING GROUP TRANSMITTING OF SHORT-MESSAGE**

(30) Priority: 02.03.2007 CN 200710080330; 15.06.2007 CN 200710111348; 15.01.2008 CN 200810001027
(71) Applicant: Huawei Technologies Co., Ltd., Longgang District, Shenzhen Guangdong 518129 (CN)
(72) Inventor: SUN, Chengzhen, Guangdong 518129 (CN)
(74) Representative: Gulde, Klaus W.
(86) International application number: PCT/CN2008/070356
(87) International publication number: WO 2008/106882

(57) **Abstract**

Methods and devices for implementing group messaging are disclosed. The methods and devices relates to communication field. The method for implementing group messaging mainly includes the followings. First, a terminal device composes and sends a message containing information of a plurality of recipients and sets the display attribute parameter information of the recipients. The display attribute parameter indicates a display policy regarding how each recipient displays information of other recipients. The network side modifies recipient information in the received message as desired by the transmitting side based on the display attribute information and sends the modified message. The transmitting side may decide to disclose how much information of other recipients to any recipient as desired.

## Description

### FIELD OF THE INVENTION

The present invention relates to communication field, and more specifically, to a solution to group messaging.

### BACKGROUND

In a communication system, Short Message Service (SMS) is stored or forwarded via an independent Short Message Service Center (SM-SC) in order to relay the transmission of the short message.

Currently, with respect to short message transmission, a group messaging technique is provided so that the transmitting side may transmit one short message to multiple users with one operation. The realization of the group messaging technique facilitates a user to transmit a batch of short messages to multiple recipients.

Two solutions to group messaging techniques according to the conventional art are described below.

A first solution is to provide a group messaging mechanism in a terminal device of a terminal user, such as a cell phone. After the terminal user selects to send a short message via the group messaging mechanism, the terminal device may transmit the short message to multiple recipients one by one so that the receiving side may receive the short message. Although the group messaging mechanism in this solution realizes the group messaging function for the terminal user, in the terminal device the short message still has to be transmitted to each recipient one by one via the SM-SC at the network side. Consequently, the limited wireless resource is wasted and, moreover, the expenditure afforded by the user is increased.

A second solution is that only one message is sent to the SM-SC at the network side by a terminal user, wherein the message is to be sent to multiple recipients. After that, the SM-SC may transmit the message to each recipient. As a result, the problems of waste of wireless resource and increase of user expenditure are solved.

Specifically, the second solution for group messaging includes the following steps. A transmitting side inserts information of all recipients in a short message to be transmitted. Then, at the network side, the SM-SC sends the message to each recipient according to the information of each recipient in the short message. Since the short message includes information of each recipient, each recipient is accessible to the information of all the recipients.

However, in some cases, for the sake of privacy, the transmitting side does not want to disclose the information of each recipient to certain recipients. This problem still remains unsolved considering existing approaches. In addition, because the network side carries information of all the recipients in each short message to be transmitted, the burden of transmitting short messages is increased.

Other similar processes of group message transmission also face with the above-mentioned problems.

### SUMMARY

Methods and devices for implementing group messaging are provided according to embodiments of the present invention. As such, the transmitting side may control the display of the information of the recipients in the short message upon request.

A method for implementing group messaging is provided according to one embodiment of the present invention. The method includes composing, by a terminal device, a message containing information of a plurality of recipients; setting display attribute parameter information for recipients, wherein the display attribute parameter indicates a display policy regarding how each recipient displays information of other recipients; and sending the composed message.

A terminal device is provided according to one embodiment of the present invention. The terminal device includes:
a display attribute parameter determination unit, configured to determine display attribute parameter information for each intended recipient, the display attribute parameter indicating a display policy regarding how each recipient displays information of other recipients;
a message composing unit, configured to compose a message containing information of a plurality of recipients, and set the display attribute parameter information determined by the display attribute parameter determination unit; and
a message transmitting unit, configured to transmit a message composed by the message composing unit.

A method for implementing group messaging is provided according to one embodiment of the present invention. The method includes:
receiving, by a network side device, a message containing a plurality of recipients;
determining, by the network side device, a display policy for each recipient based on a display attribute parameter; modifying recipient information in the received message, wherein the display attribute parameter indicates the display policy regarding how each recipient displays information of other recipients; and
sending the modified message to each recipient.

A network device is provided according to one embodiment of the present invention. The network device includes:
a message receiving unit, configured to receive a message containing information of a plurality of recipients;
a recipient information modification unit, configured to determine a display policy for each recipient based on a display attribute parameter; and modify recipient information in the received message, where the display attribute parameter is used to indicate the display policy regarding how each recipient displays information of other recipients; and
a message delivering unit, configured to send the modified message to each recipient.

### BRIEF DESCRIPTION OF THE DRAWINGS

Figure 1 is a flowchart of a method according to one embodiment of the present invention;

Figure 2 is a first structure of a message carrying display attribute parameters according to one embodiment of the present invention;

Figure 3 is a second structure of a message carrying display attribute parameters according to one embodiment of the present invention;

Figure 4 is a processing procedure of a terminal side according to one embodiment of the present invention;

Figure 5 is a processing procedure of a network side according to one embodiment of the present invention;

Figure 6 is a schematic of a method for implementing group messaging according to one embodiment of the present invention;

Figure 7 is a specific flowchart of a method for implementing group messaging according to one embodiment of the present invention;

Figure 8 is a block diagram of a terminal device according to one embodiment of the present invention;

Figure 9 is a block diagram of a network device according to one embodiment of the present invention; and

Figure 10 is a specific structure of a network device according to one embodiment of the present invention.

### DETAILED DESCRIPTION

According to various embodiments of the present invention, a terminal user configures a display attribute parameter relating to a receiving side according to a personal service demand (e.g., personal tendency and preference, etc), for instance, configures a display attribute parameter relating to a receiving side at a terminal device or at the network side device. The parameter can be used to request the network side to display information such as the addresses of other recipients for each recipient according to a predetermined policy. As such, the parameter can be used to make a certain or some recipients unable to reply to other recipients directly. Then, the network side may determine a message processing manner for use in the short message transmitting process, and a corresponding Message Terminating (MT) message header is generated for different user requirements. Accordingly, the user privacy can be protected. As a result, embodiments of the present invention can not only guarantee the user privacy so that the service applications are increased, but also reduce the redundancy in the message during the short message transmitting process so that the network resources are saved.

The terminal device may transmit the display attribute parameter along with the message including information of multiple recipients to a network side device. The terminal device can also send a message including display attribute parameters and another message including information of multiple recipients separately to the network side device. In this case, the message carrying display attribute parameters may be referred to as a parameter setting message.

The user may set display attribute parameters at the network side device or modify the display attribute parameters at the network side device via other approaches. For instance, a user may access the network side device with a portal or Wireless Application Protocol (WAP) and set or modify recipient display parameters (i.e., display attribute parameters).

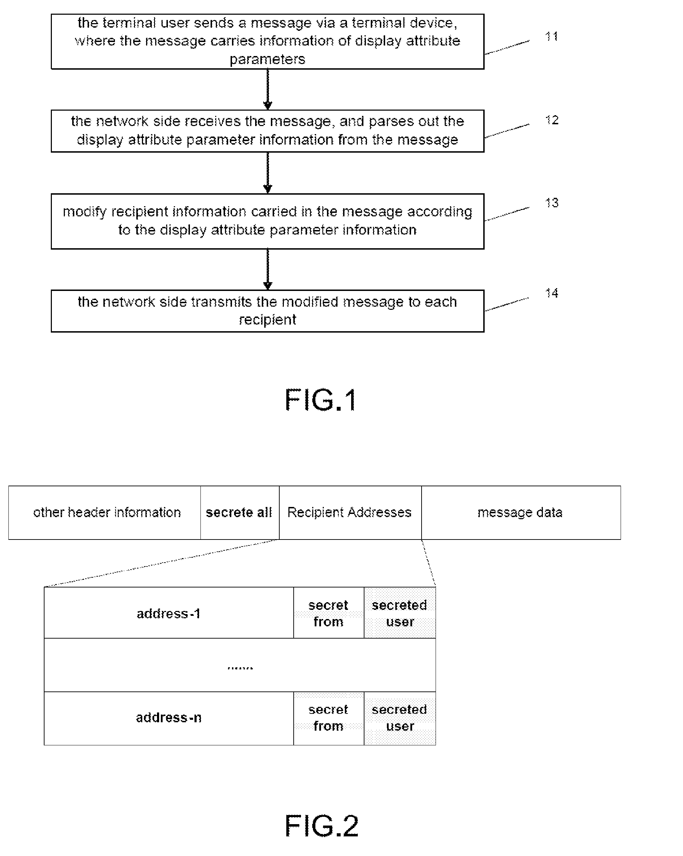

The implementation of one embodiment of the present invention is shown in Figure 1, which includes the following steps.

Step 11: The terminal user sends a message via a terminal device, and the message carries information of display attribute parameters.

When the terminal user composes a message to be sent to multiple recipients, the addresses of multiple recipients are carried in the same message is adopted to conduct transmission. At the same time, the message is also configured with related display attribute parameter information which is used to indicate that the terminal user of a transmitting side does not want to disclose the information of other recipients to the recipient.

Step 12: The network side receives the message, and parses out the display attribute parameter information from the message.

Step 13: Recipient information carried in the message is modified according to the display attribute parameter information.

Specifically, a display policy on how each recipient displays information of other recipients is determined based on the display attribute parameters and a short message carrying modified recipient information is determined for each recipient, respectively. The display policy is a policy regarding how each recipient displays information of other recipients.

The recipient information display policy may be a recipient information display policy directing to a single recipient, or a recipient information display policy directing to multiple recipients. For instance, users A, B, C, D are four recipients. Then, a corresponding recipient information display policy can be set in the following way. Users A and B are inaccessible to information of other recipients other than the user A and user B's. Users C and D are inaccessible to information of all the recipients. Alternatively, users A, B, C, D are inaccessible to information of other recipients. Apparently, the term "other recipients" herein refers to recipients other than a recipient who receives the message. For instance, user B, C and D are "other recipients" with regard to user A.

As such, the transmitting side may control the information of the recipients to be displayed in the group message on the receiving terminal.

Step 14: The network side may transmit the modified message to each recipient according to the recipient information display policy.

For the purpose of implementing embodiments of the present invention, a preferred implementation is provided according to embodiments of the present invention, the implementation will be described in detail below.

In this preferred embodiment, at least one of the three parameters indicating whether or not to secrete the called parties' addresses in the message is added as the display attribute parameter in a transmission protocol relating to the message. Of course, the embodiments of the present invention are not limited to these three parameters. The three parameters are listed below.

(1) A parameter indicative of secreting information from all recipients, denoted as "secrete all".

The meaning of the parameter is that when the transmitting side does not want to disclose information of other recipients to the recipient, the parameter can be set as the display attribute parameter.

(2) A parameter indicative of secreting from a certain recipient, denoted as "secret from". The parameter refers to secreting information of other recipients from a certain recipient.

The parameter means to hide the information of other recipients from a certain recipient. That is, when the transmitting side does not want to disclose information of other recipients to a certain recipient, the parameter can be set as the display attribute parameter.

The parameter can be provided by adding a prefix or postfix to the address of the called party. Or, the parameter can be an independent parameter. The information (e.g., the address of the called party) of the recipient to whom the transmitting side does not want to disclose the information of the other recipients is placed in an area defined for the parameter, etc.

In one implementation, in the case of an independent parameter, the certain recipient can be added in the defined area, indicating that the certain recipient is blind to the other recipients' information.

(3) A parameter indicative of secreting a certain recipient. The parameter refers to hiding information of some particular recipients from the other recipients. This parameter is denoted as "secreted user".

The parameter means that when the transmitting side does not want to disclose the information of these particular users to other recipients, the parameter can be set as the display attribute parameter.

The parameter can be provided by adding a prefix or postfix to the address of the called party. Or, the parameter can be an independent parameter. The information (e.g., the address of the called party) of some particular recipients is placed in a defined area for the parameter.

In one embodiment, in the case of an independent parameter, the parameter "secreted user" can be set as YES, or the address of the recipient (i.e., the called party) can be added in the defined area for the parameter "secreted user", indicating that other recipients are blind to the address information of the recipient which has been configured with the parameter "secreted user".

The meaning of setting parameter "secreted user" to YES or placing the address of the called party in the defined area for the parameter "secreted user" are two folded. One is that the recipient is accessible to the address information of all the other recipients. The other is that the recipient can only be accessible to the address information of the recipients whose parameters "secreted user" are set to NO or the recipients whose addresses have not been placed in the defined area for the parameter "secreted user". At the network side, the message can be modified according to a predetermined policy (i.e., the first meaning or the second meaning).

Based on the above three parameters, if the transmitting side does not want to disclose the information of other recipients to all the recipients. The process is presented below. Only one parameter "secrete all" is set. This parameter indicates that the transmitting side does not want to disclose the information of other recipients to all the recipients. Or, all the recipients' information can be recorded in the defined area for the parameter "secret from."

Furthermore, the user may also set a default state at the terminal by preference. Based on the default state, the terminal may identify that the user does not want to disclose the information of other recipients to all the recipients. Or, a relevant processing approach is employed to send the message based on a default state of a display attribute parameter regarding a particular recipient. As such, the transmitting side does not need to go through a configuration process each time when sending group messages in a corresponding form. Accordingly, the operation is simplified.

It is noted that the above three parameters can be three independent display attribute parameters. Alternatively, a combination of any of the above three parameters can be used to form the display attribute parameter. That is, the above three parameters can be used independently or in combination.

In one embodiment, the relation among the three parameters can be:

1) if parameter "secrete all" is set to YES, parameters "secret from" are all set to YES automatically.

2) if parameters "secret from" are all set to YES, it achieves the effect of setting the parameter "secrete all" to YES.

3) setting parameter "secreted user" to YES or placing the address of the called party in the defined area for the parameter "secreted user" means that in the case where parameter "secreted user" is set to YES or in the case where the user who is set as "secreted user" can see the information of all the other recipients, if parameters "secreted user" are all set to YES, it achieves the effect of setting the parameter "secrete all" to NO.

4) setting parameter "secreted user" to YES or placing the address of the called party in the defined area for the parameter "secreted user" means that in the case where parameter "secreted user" is set to YES or in the case where the user who is set as "secreted user" can see the information of other recipients who are not set as valid "secreted user",
if the parameter "secrete all" is set to YES, "secreted user" are all automatically set to YES.
if parameters "secreted user" are all set to YES, it achieves the effect of setting the parameter "secrete all" to YES.

Based on the relations among each parameter, one or more of below configurations can be employed in the terminal device without limitation.

If the terminal device sets all the parameters "secret from" as valid, the parameter "secrete all" is automatically set as valid.

If the validity of the parameter "secreted user" means that the user can only be accessible to the information of the recipients whose "secreted user" are not valid and the terminal device sets all the parameters "secreted user" as valid, the parameter "secrete all" is automatically set as valid.

If the validity of the parameter "secreted user" means that the user may accessible to information of all the other recipients and all the parameters "secreted user" are set as valid, the parameter "secrete all" is automatically set as invalid.

With the above configuration, the process of processing display attribute parameters at the network side can be simplified.

In one embodiment of the present invention, the existing message transmission protocol can be extended to carry the display attribute parameters. For instance, the SMS protocol (e.g., Mobile Application Part protocol, etc.), IMS message protocol (e.g., Session Initiated Protocol SIP, etc.) and CPM (converged IP message) transmission protocol can be extended or some unutilized fields in the related protocol can be redefined so as to carry the display attribute parameters.

Three parameters "secrete all", "secret from" and "secreted user" will be described below as an example for illustration of the configuration of the related parameters.

A first solution is described as follows.

A prefix or a postfix is added to the address information of the recipient, indicating the meaning of parameter "secret from" and "secreted user". As shown in Figure 2, address-1 to address-n are added with postfixes "secret from" and "secreted user" so that the terminal user may perform a corresponding parameter setting.

For instance, parameters "secret from" and "secreted user" can be added as a prefix or postfix to a Relay Station-Destination Address field or a Transmission Protocol-Destination-Address information element in an SMS message. Alternatively, parameters "secret from" and "secreted user" can be added as a prefix or postfix to a To field (destination user address) or request URI message header in an IMS message.

A second solution is described as follows.

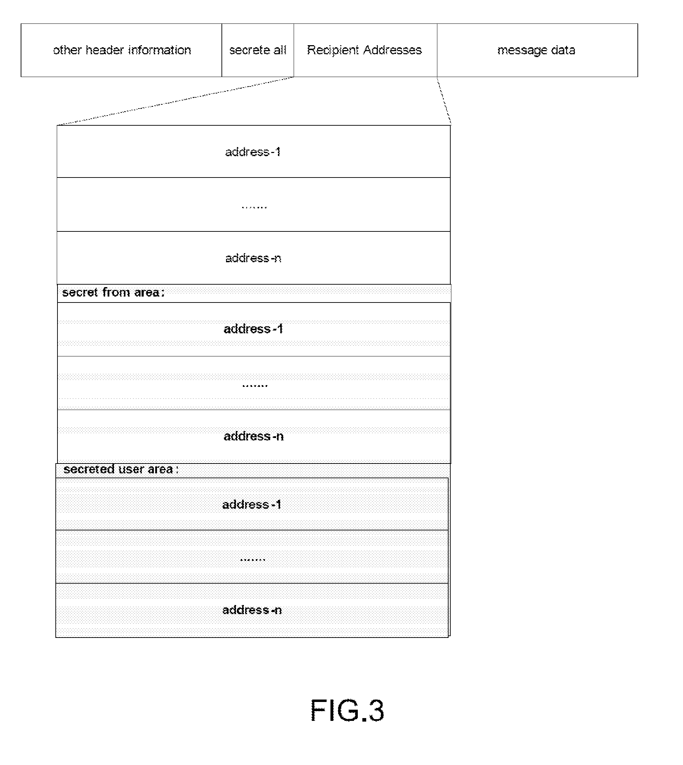

An independent parameter is set. The address of the called party (i.e. recipient) to whom the transmitting side does not want to disclose the information of the other recipients is provided in the defined area. Alternatively, the information of a particular recipient (e.g., the address of the called party) is provided in the defined area for the parameter and the specific value for the parameters "secret from" and "secreted user" are set, i.e. valid or invalid. As shown in Figure 3, a "secret from" area is used to record the address information of the particular recipient corresponding to the parameter. A "secreted user" area is used to record the address information of the particular recipient corresponding to the parameter.

For instance, specifically, a "secret from" area and a "secreted user" area can be provided in a Relay Station-Destination Address field or a Transmission Protocol-Destination-Address information element in an SMS message so as to record the address or ID information of a corresponding recipient in this area. Alternatively, "secret from" area and "secreted user" area can be provided in the To field (destination user address) or request URI field in an IMS message so as to record the address or ID information of a corresponding recipient in this area.

Based on the three parameters "secrete all", "secret from" and "secreted user", the implementation of embodiments of the present invention includes two parts, a terminal side processing procedure and a network side processing procedure. These two processing procedures are now detailed below.

(1) Terminal side processing procedure

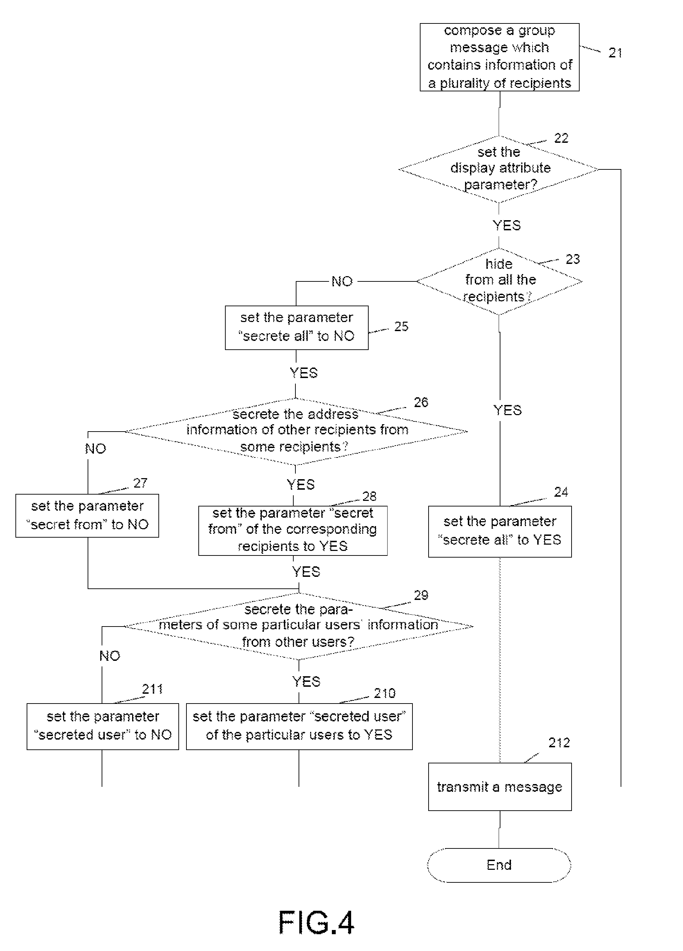

As illustrated in Figure 4, at a terminal side, a corresponding processing procedure includes the following steps.

Step 21: In the terminal device, the content of a message to be transmitted is composed and recipient information relating to the message is determined. Specifically, a message to be transmitted contains information of a plurality of recipients.

Address ID of a corresponding recipient is selected from a directory or is entered manually.

Step 22: The terminal device may prompt the user whether or not to set the display attribute parameter. If the user is to configure the display attribute parameter, step 23 is performed; otherwise, step 212 is performed.

That is, the transmitting side determines whether or not to disclose the information of other recipients to the recipient. If the transmitting side wants to disclose the information of other recipients to the recipient, step 212 is performed directly; otherwise, step 23 is performed.

Step 23: It is determined whether or not to hide information of other recipients from all the recipients, that is, to determine whether or not to secrete the information of other recipients from all the users. If it is determined to secrete the information of other recipients from all the users, step 24 is performed; otherwise, step 25 is performed.

Step 24: The terminal device sets parameter "secrete all" as valid, i.e. YES, requiring secrete information of other recipients from all the recipients. Then, step 212 is performed.

Step 25: The parameter "secrete all" is set to NO, and step 26 is performed.

Step 26: It is determined whether or not to secrete information of other recipients from a certain or some recipients. If it is determined to secrete information of other recipients from one or some recipients, step 28 is performed; otherwise, step 27 is performed.

Step 27: The terminal device sets the parameter "secret from" of the related recipient as NO, and step 29 is performed.

Step 28: The terminal device sets the parameter "secret from" of each recipient to YES. That is, the terminal device sets the parameter "secret from" to YES corresponding to the address of each user to whom the transmitting side does not want to disclose the address information of other recipients, and step 29 is performed.

Step 29: It is determined whether or not to secrete a certain or some recipients' information. If it is determined to secrete a certain or some recipients' information, step 210 is performed; otherwise, step 211 is performed.

Step 210: The terminal device sets the parameter "secreted user" of a corresponding recipient as YES. That is, the terminal device sets the parameter "secreted user" as YES corresponding to the address of each particular recipient whose information needs to be secreted, and step 212 is performed.

Step 211: The terminal device sets the parameter "secreted user" of each recipient as NO, and step 212 is performed.

Step 212: A message with the set display attribute parameter is transmitted. That is, the transmitting message is included with three parameters "secrete all", "secret from", and "secreted user."

In the above procedure, it is also possible to set only one or more parameters. When only a part of the parameters are set, part of the procedure is enough to achieve the related functionalities. For instance, steps 21 to 25 and step 212 are enough to complete the processing. Alternatively, steps 21 to 28 and step 212 are enough to complete the processing. Alternatively, steps 21, 22 and step 26 to step 212 are enough to complete the processing, etc.

The implementation of the network side processing procedure is described below by reference to the above terminal side processing procedure.

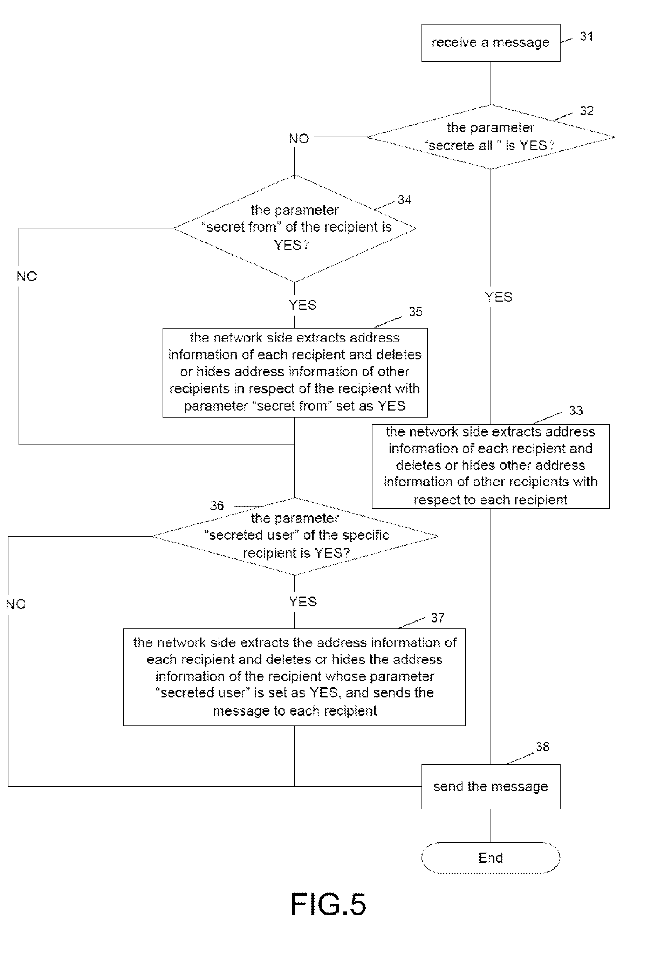

A corresponding network side processing procedure is shown in Figure 5. That is, the implementation of the network side device receiving the message carrying address information of multiple recipients includes below steps.

Step 31; A network side device receives a message.

Step 32: The network side device determines the state of the parameter "secrete all." If the parameter is set as YES, step 33 is performed; otherwise, step 34 is performed.

Step 33: The network side extracts address information of each recipient and deletes or hides other address information of other recipients with respect to each recipient. Then, step 38 is performed.

Step 34: The state of the configuration of the parameter "secret from" corresponding to the address of the recipient is determined. If the configuration is YES, step 35 is performed; otherwise, step 36 is performed.

Step 35: If the parameter "secret from" is set as YES, the network side extracts address information of each recipient and deletes or hides address information of other recipients in respect of the recipient with parameter "secret from" set as YES. Then, step 36 is performed.

In this step, after the parameter indicative of secreting information of other recipients from a certain recipient (assume user A) is determined to be valid, the network side may adopt any one of the following approaches when sending messages to the other recipients.

(1) Hide information of user A from other recipients or not send information of user A to other recipients.

(2) Send the information of user A to other recipients.

In the case where the network sends the information of user A to the other recipients, the other recipients may see the information of user A and may reply the message to user A directly. Alternatively, it may also configure not to reply to the user A directly.

Step 36: The status of the parameter "secreted user" relating to the address of the specific recipient whose information is hidden from the other recipients is identified. If the parameter is set as YES, step 37 is performed; otherwise, step 38 is performed.

Step 37: If the parameter "secreted user" is set as YES, the network side may extract the address information of each recipient and deletes or hides the address information of the recipient whose parameter "secreted user" is set as YES. Then, step 38 is performed.

In this step, after the parameter indicative of secreting information of a certain recipient from other recipients is determined as valid, the recipient whose parameter indicative of secreting a certain recipient from other recipients is valid may be identified from all the other recipients based on a predetermined policy so as to handles respectively the display relationship between two recipients whose parameter "secreted user" are valid. For instance, the information of the corresponding recipient can be remained in the message so that each party is visible to each other. Alternatively, the information of the corresponding recipient can be deleted or hidden in the message so that each party is invisible to each other (In this case, parameter "secreted user" of the other recipients may not be recognized, instead of deleting or hiding operation may be performed directly).

Step 38: The message after the above procedure is sent to each recipient.

It is noted that if only one or more of the three parameters are set, only part of the processing procedure need to be performed. For instance, if only the parameter "secrete all" is set, the network side device only needs to perform step 31 to 33, and step 38. The other processing procedure can be skipped. If only the parameter "secreted user" is set, the network side device only needs to perform step 31, step 36 to 38.

If the embodiment is implemented in a 3GPP (Third Generation Partner Project) network, the network side device may function as a message server such as Short Message Service Center (SM-SC), IP short message gateway (IP-SM-GW), Service Call Session Control Function (S-CSCF) and CPM Server, etc. Or, the embodiment may be implemented with a newly added network entity.

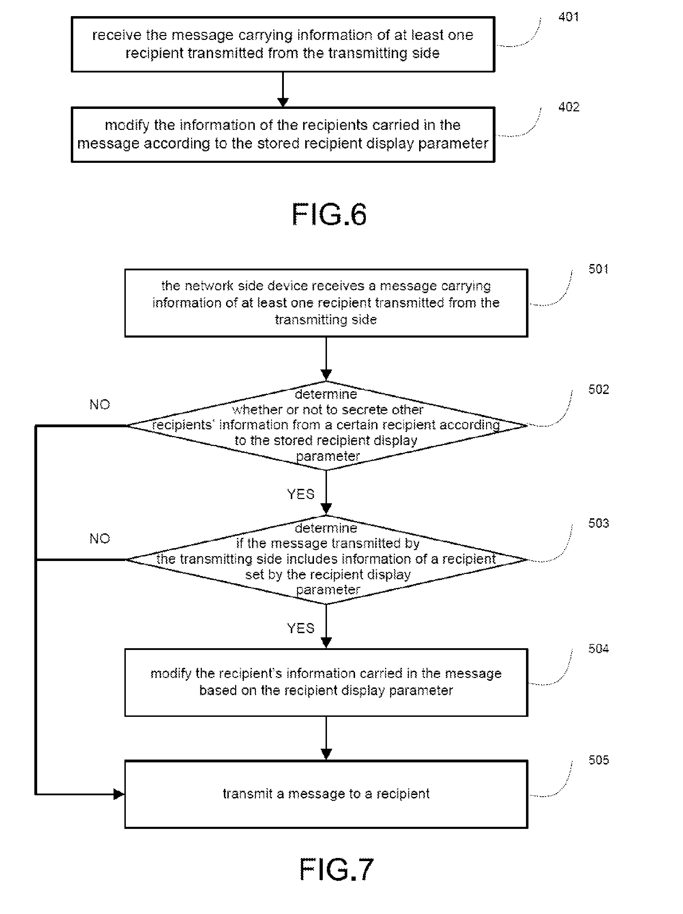

Another implementation of the embodiment of the present invention is shown in Figure 6, which includes the following steps.

Step 401: The message carrying information of at least one recipient transmitted from the transmitting side (i.e. the terminal device in Figure 1) is received. The transmitting side sends a message carrying information of at least one recipient. The network side device receives the message.

Step 402: The network side device modifies the information of the recipients carried in the message according to the stored recipient display parameter (i.e. display attribute parameter). The transmitting side may transmit the message carrying recipient display parameter to the network side device so as to set or modify the recipient display parameter. Alternatively, the transmitting side may access the network side device by way of other approaches, such as portal or Wireless Application Protocol, etc, so as to set or modify the recipient display parameter. The network side receives and stores the recipient display parameter. After the network side device receives the message carrying information of multiple recipients transmitted from the transmitting side, the network side device modifies the information of the recipients carried in the message according to the stored recipient display parameter and generates a corresponding Mobile Terminating (MT) message so as to protect the privacy of the recipients.

Another embodiment of the present invention is shown in Figure 7, which includes the following steps.

Step 501: The network side device receives a message carrying information of at least one recipient transmitted from the transmitting side (i.e., the terminal device in Figure 1).

Step 502: The network side determines whether or not to secrete other recipients' information from a certain recipient according to the stored recipient display parameter (i.e., display attribute parameter). The network side determining whether or not to secrete other recipients' information from a certain recipient according to the stored recipient display parameter (i.e., display attribute parameter) includes determining whether or not to secrete information of other recipients other than a certain recipient itself from each recipient according to a stored recipient display parameter; or determining whether or not to secrete information of other recipients other than one or more recipients from the one or more recipients according to a stored recipient display parameter; or determining whether or not to secrete information of one or more recipients from other recipients other than the one or more recipients according to the stored recipient display parameter. If the answer is yes, step 503 is performed; otherwise, step 505 is performed.

Step 503: It is determined if the message transmitted by the transmitting side includes information of a recipient set by the recipient display parameter. After the network side device determines to secrete other recipients' information from a certain recipient according to the stored recipient display parameter, the network side may further determine whether or not the message transmitted by the transmitting side includes information of the recipients set by the user display parameter. If it includes, step 504 is performed; otherwise, step 505 is performed.

Step 504: The recipient's information carried in the message is modified based on the recipient display parameter. After determining that the message includes the recipients' information, the network side device modifies the recipients' information carried in the message. Specifically, a recipient information display policy for each recipient is determined based on the stored recipient display parameter. For instance, suppose there are four recipients A, B, C, and D. A corresponding recipient information display policy can be set as follows. Other recipients' information is secreted from D and A. In other words, information of recipient A, B, C is secreted from recipient D, and information of recipient B, C, D is secreted from recipient A. Information of all the recipients is disclosed to B and C. Alternatively, the recipient information display policy can be set in such a way that information of other recipients other than recipients A, B, C, or D is secreted from recipients A, B, C, D. In other words, information of recipients B, C, D is secreted from A. Information of recipients A, C, D is secreted from B. Information of recipients A, B, D is secreted from C. Information of recipients A, B, C is secreted from D. Therefore, the transmitting side may control group messaging as desired.

Then, the network side device may determine a message carrying modified recipients' information for each recipient.

Specifically, if it is required to secrete information of other recipients from each recipient and the message transmitted by the transmitting side includes information of each recipient, messages transmitted to each recipient are modified. The modification includes deleting or secreting information of other recipients other than each recipient in the message transmitted by the transmitting side to each recipient.

If it is required to secrete information of other recipients other than one or more recipients itself from the one or more recipient and the message transmitted by the transmitting side includes information of the recipients to be secreted, messages transmitted to the above one or more recipients are modified. The modification includes deleting or secreting information of other recipients other than the one or more recipients in the message transmitted by the transmitting side to the one or more recipients, then deleting or secreting information of the one or more recipients in the message transmitted by the transmitting side to the other recipients other than the one or more recipients.

If it is required to secrete information of the one or more recipients from other recipients other than the one or more recipients and the message transmitted by the transmitting side includes information of the one or more recipients, messages transmitted to other recipients other than the one or more recipients are modified. The modification includes deleting or secreting information of the one or more recipients in the message transmitted by the transmitting side to the other recipients other than the one or more recipients.

Step 505: A message is transmitted to a recipient. After modifying the recipients' information carried in the message according to the stored recipient display parameter, the network side device determines an MT procedure message according to the modified recipients' information and sends the message to a corresponding recipient.

Based on such information protection method, the network side device receives a message carrying information of a plurality of recipients from the transmitting side, and modifies information of the recipients carried in the message according to a stored recipient display parameter. As such, privacy of the recipients is protected effectively in the message transmission process. Meanwhile, the change to the existing message transmission protocol is minimized and the applications of delivering one message to multiple recipients are expanded. Further, the service demand is increased and the user requirements are met, thereby bringing more incomes to the operators.

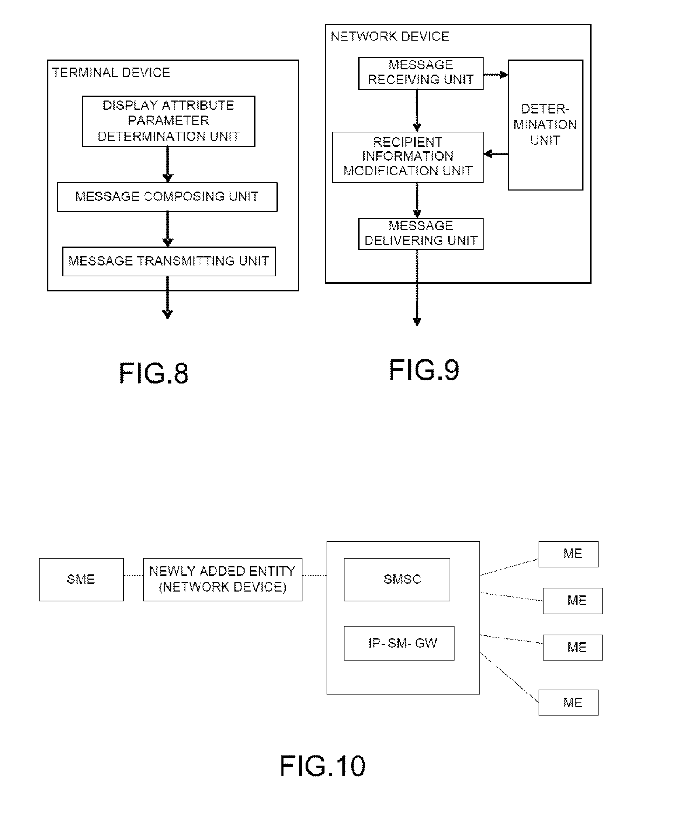

An apparatus for implementing group messaging, i.e., a terminal device, is also provided according to one embodiment of the present invention. Figure 8 illustrates the structure of the apparatus. The apparatus includes the following elements.

(1) Display attribute parameter determination unit

The unit is configured to determine display attribute parameter information for each recipient to whom a message is to be sent. The display attribute parameter is configured to indicate a display policy regarding how each recipient displays information of the other recipients. Specifically, the display attribute parameter used may include, but not limited to, at least one of a parameter indicative of secreting information from all recipients, a parameter indicative of secreting from a certain recipient, and a parameter indicative of secreting a certain recipient.

The display attribute parameter determination unit may acquire display attribute parameter information entered by a terminal user via an interface for acquiring display attribute parameter wherein the interface is provided in the terminal device. For instance, a relevant menu is provided in the terminal device. After the terminal user selects the menu for setting the display attribute parameter information, the terminal user may set the display attribute parameters relating to each recipient step by step.

(2) Message composing unit

The unit is adapted to compose a message including information of a plurality of recipients, and set the display attribute parameter information determined by the display attribute parameter determination unit. Specifically, the unit may carry the display attribute parameter information in an extended field or reserved field in the message. Of course, the unit may also add a new field to carry the display attribute parameter information. Alternatively, the unit may carry the display attribute parameter information in a newly defined message header (e.g., in the newly defined message header in the IMS message).

If the display attribute parameter determined by the display attribute parameter determination unit includes at least one of a parameter indicative of secreting information from all recipients, a parameter indicative of secreting information of other recipients from a certain recipient, and a parameter indicative of secreting information of a certain recipient from other recipients, the message composing unit may be implemented with at least one of the following approaches.

In a first implementation, the message composing unit includes a first determination unit and a first message setting unit.

The first determination unit is configured to determine whether or not to secrete the information of the other recipients from all the recipients and inform the first message setting unit of the determination result.

A first message setting unit is configured to acquire the determination result. If the determination result is yes, the parameter indicative of secreting information from all recipients is set as valid; otherwise, the parameter indicative of secreting information from all recipients is set as invalid.

In a second implementation, the message composing unit includes a second determination unit and a second message setting unit.

The second determination unit is configured to determine whether or not to secrete the information of the other recipients from a certain recipient and inform the second message setting unit of the determination result.

The second message setting unit is configured to acquire the determination result. If the determination result is yes, for the recipient, the parameter indicative of secreting information of other recipients from the certain recipient is set as valid; otherwise, the parameter indicative of secreting information of other recipients from the certain recipient is set as invalid.

In a third implementation, the message composing unit includes a third determination unit and a third message setting unit.

The third determination unit is configured to determine whether or not to secrete the information of a certain recipient from other recipients and inform the third message setting unit of the determination result.

The third message setting unit is configured to acquire the determination result. If the determination result is yes, for the recipient, the parameter indicative of secreting information of the certain recipient from other recipients is set as valid; otherwise, the parameter indicative of secreting information of the certain recipient from other recipients is set as invalid.

The second message setting unit and/or the third message setting unit may add the parameter in a prefix or postfix of the recipient addresses in the message. Alternatively, the second message setting unit and/or the third message setting unit may add the addresses of the recipients whose parameters are valid in a defined area.

The message composing unit may also automatically trigger the second message setting unit to set all the parameters indicative of secreting information of other recipients from a certain recipient as valid and/or trigger the third message setting unit to set all the parameters indicative of secreting information of a certain recipient from other recipients as valid, after the first message setting unit sets the parameter indicative of secreting information from all recipients as valid.

(3) Message transmitting unit

The unit is configured to transmit a message composed by the message composing unit. That is, the unit transmits the message to a network side device and the network side device may send the message to each recipient.

An apparatus for implementing group messaging, i.e. a network device, is also provided according to one embodiment of the present invention. Figure 9 illustrates the structure of the apparatus. The apparatus includes the following elements.

(1) Message receiving unit

The unit is configured to receive a message including a plurality of recipients and display attribute parameters transmitted from the terminal device. The information contained in the display attribute parameter has been described in the description of the terminal device, which is omitted herein for brevity. The message received by the message receiving unit may includes a plurality of recipients and display attribute parameters at the same time. Further, the display attribute parameter may also be included in a parameter setting message. The message receiving unit receives the parameter setting message.

The apparatus according to the embodiment of the present invention may further include a storage module (not shown in Figure 9). The storage module is configured to store the display attribute parameter information carried in the parameter setting message. The display attribute parameters stored in the storage module may be display attribute parameters carried in the parameter setting message. The display attribute parameters stored in the storage module are provided to a recipient information modification unit. The user may set or modify display attribute parameters (i.e. recipient display parameter) in the storage module via other approaches. For instance, the user may access a network side device in the form of portal or Wireless Application Protocol (WAP) and may set or modify the display attribute parameters in the storage module.

(2) Recipient information modification unit

The unit is configured to determine a display policy for each recipient based on the display attribute parameters and modify the recipient information in the received message so as to obtain messages for each recipient. Further, the recipient information in each message is the information that the transmitting side intents to display.

It is noted that if the display attribute parameters in the message received by the message receiving unit includes at least one of a parameter indicative of secreting information from all recipients, a parameter indicative of secreting information of other recipients from a certain recipient, and a parameter indicative of secreting information of a certain recipient from other recipients, then the recipient information modification unit can be implemented with at least one of the approaches.

In a first implementation, the recipient information modification unit includes a first parameter identification unit and a first message modification unit.

The first parameter identification unit is configured to identify if the parameter indicative of secreting information from all recipients is valid. If the parameter is identified to be valid, the first parameter identification unit triggers the first message modification unit.

The first message modification unit is configured to delete or secrete information of all the other recipients in the message relating to each recipient.

In a second implementation, the recipient information modification unit includes a second parameter identification unit and a second message modification unit.

The second parameter identification unit is configured to identify if the parameter indicative of secreting information of other recipients from a certain recipient is valid. If the parameter is identified to be valid, the second parameter identification unit triggers the second message modification unit.

The second message modification unit is configured to delete or secrete information of other recipients in the message relating to the recipient.

In a third implementation, the recipient information modification unit includes a third parameter identification unit and a third message modification unit.

The third parameter identification unit is configured to identify if the parameter indicative of secreting information of a certain recipient from other recipients is valid. If the parameter is identified to be valid, the third parameter identification unit triggers the third message modification unit.

The third message modification unit is configured to delete or secrete information of the recipient in the messages relating to each of the other recipients.

The recipient information modification unit may further include a unit for identifying other parameter. The unit for identifying other parameter is configured to identify recipients whose parameters indicative of secreting information of a certain recipient from other recipients are valid from the other recipients and configured to trigger the third message modification unit to delete or secrete or reserve the information of the recipient in the message according to a predetermined policy after the third parameter identification unit identifies the parameter to be valid.

(3) Message delivering unit

The unit is configured to transmit the modified message to each recipient so that each recipient may receive the message transmitted from the transmitting side.

Since the message received by the network side device might not include display attribute parameter information, optionally, the network device may further include a determination unit for determine if the received message includes the display attribute parameter information. After it is determined that the received message includes the display attribute parameter information, the determination unit triggers the recipient information modification unit to modify the information of the recipients in the received group message as desired by the transmitting side.

If the above apparatus (e.g., the network device) is to be implemented in the 3GPP network, the corresponding network device may be placed before SM-SC in the traditional short message system or IP-SM-GW in the SMSIP system. As shown in Figure 10, the newly added entity is the network device of the present invention. The entity is used to convert or distribute the message so as to reduce the impact due to changes to the existing device.

In addition, the network device may also serve as a function module in the SM-SC in the traditional short message system or in the IP-SM-GW in the SMSIP system so as to achieve a corresponding processing function.

It should be noted that the embodiments according to the present invention are not limited to be applicable in the short message related system. They may also be applicable in the message systems such as MMS, IM, CPM (converged IP message). In other words, the network device according to the embodiments of the present invention can be implemented based on SM-SC, IP-SM-GW, S-CSCF and CPM server.

In conclusion, related parameters are set and the method for setting these parameters as well as the relation among the parameters are proposed. Moreover, a corresponding processing procedure is provided. As such, the user privacy is protected, and applications of delivering one message to multiple recipients are expanded, thereby bringing more incomes to the operators.

The above are merely exemplary embodiments of the present invention, while the scope of the present invention is not so limited. Any variations or equivalents can be readily appreciated by those skilled in the art. These variations or equivalents shall be construed as fall within the scope of the present invention. Therefore, the scope of the present invention should be determined by the scope of the claims.

## Claims

1. A method for implementing group messaging, **characterized in** comprising:
composing, by a terminal device, a message containing information of a plurality of recipients;
setting display attribute parameter information for a recipient, wherein the display attribute parameter indicates a display policy regarding how each recipient displays information of other recipients; and
sending the composed message.

2. The method of claim 1, **characterized in that,** the message composed by the terminal device contains display attribute parameter information of the recipient.

3. The method of claim 2, **characterized in that**, the display attribute parameter information is set in respect of each recipient or in respect of a group of recipients.

4. The method of claim 1, 2 or 3, **characterized in that,** the display attribute parameter comprises at least one of a parameter indicative of secreting information from all recipients, a parameter indicative of secreting information of other recipients from a certain recipient, and a parameter indicative of secreting information of a certain recipient from other recipients.

5. The method of claim 4, **characterized in that**, the step of setting the display attribute parameter information comprises:
determining, by the terminal device, whether or not to secrete information of other recipients from all the recipients; setting the parameter indicative of secreting information from all recipients as valid if it is determined to secrete information of other recipients from all the recipients; otherwise, setting the parameter indicative of secreting information from all recipients as invalid;
and/or
determining, by the terminal device, whether or not to secrete information of other recipients from a certain recipient; setting, for the recipient, the parameter indicative of secreting information of other recipients from the certain recipient as valid if it is determined to secrete information of other recipients from the certain recipient; otherwise, setting the parameter indicative of secreting information of other recipients from the certain recipient as invalid;
and/or
determining, by the terminal device, whether or not to secrete information of a certain recipient from other recipients; setting, for the recipient, the parameter indicative of secreting information of the certain recipient from other recipients as valid if it is determined to secrete information of the certain recipient from the other recipients; otherwise, setting the parameter indicative of secreting information of other recipients from the certain recipient as invalid;
and/or
determining, based on a default state detected by the terminal device, that a user requires to secrete information of other recipients from all the recipients or a user requires to set the display attribute parameter for a certain recipient as valid; and setting the display attribute parameter accordingly.

6. The method of claim 5, **characterized in** further comprising:
automatically setting the parameter indicative of secreting information from all recipients as valid if the terminal device sets all the parameters indicative of secreting information of other recipients from a certain recipient as valid;
and/or
automatically setting the parameter indicative of secreting information from all recipients as valid if the validity of the parameter indicative of secreting a certain recipient from other recipients refers to that the recipient is only accessible to the information of the recipients whose parameters are not set as valid and the terminal device sets all the parameters indicative of secreting information of the certain recipient from other recipients as valid; or, automatically setting the parameter indicative of secreting information from all recipients as invalid if the validity of the parameter indicative of secreting a certain recipient from other recipients refers to that the recipient is accessible to the information of all the other recipients and the terminal device sets all the parameters indicative of secreting information of the certain recipient from other recipients as valid.

7. The method of claim 4, **characterized in that**, the parameter indicative of secreting information of other recipients from a certain recipient and/or the parameter indicative of secreting information of a certain recipient from other recipients are provided in a prefix or postfix of the address of the recipient in the message; or the address of the recipient whose parameter indicative of secreting information of other recipients from a certain recipient is valid and/or whose parameter indicative of secreting information of a certain recipient from other recipients is valid is recorded in a defined area.

8. The method of claim 7, **characterized in that,** the prefix or postfix of the address of the recipient comprises: a prefix or postfix of Relay Protocol-Destination Address field of a short message service SMS message; or a prefix or postfix of a Transmission Protocol-Destination-Address information element; or a prefix or postfix of a destination user address (To) field; or a prefix or postfix in a request URI message header.

9. The method of claim 2 or 3, **characterized in that,** the display attribute parameter is carried in an extended field or a reserved field in the message, or carried in a newly defined message header.

10. A terminal device, **characterized in** comprising:
a display attribute parameter determination unit, configured to determine display attribute parameter information for each intended recipient, wherein the display attribute parameter indicates a display policy regarding how each recipient displays information of other recipients;
a message composing unit, configured to compose a message containing information of a plurality of recipients, and set the display attribute parameter information determined by the display attribute parameter determination unit; and
a message transmitting unit, configured to transmit a message composed by the message composing unit.

11. The device of claim 10, **characterized in that,** if the display attribute parameter determined by the display attribute parameter determination unit comprises at least one of a parameter indicative of secreting information from all recipients, a parameter indicative of secreting information of other recipients from a certain recipient, and a parameter indicative of secreting information of a certain recipient from other recipients,
the message composing unit comprises:
a first determination unit, configured to determine whether or not to secrete the information of the other recipients from all the recipients and inform a first message setting unit of a determination result; and
the first message setting unit, configured to acquire the determination result, wherein if the determination result is yes, the parameter indicative of secreting information from all recipients is set as valid; otherwise, the parameter indicative of secreting information from all recipients is set as invalid;
and/or the message composing unit comprises:
a second determination unit, configured to determine whether or not to secrete the information of the other recipients from a certain recipient and inform a second message setting unit of a determination result; and
the second message setting unit, configured to acquire the determination result, wherein if the determination result is yes, for the recipient, the parameter indicative of secreting information of other recipients from the certain recipient is set as valid; otherwise, the parameter indicative of secreting information of other recipients from the certain recipient is set as invalid;
and/or the message composing unit comprises:
a third determination unit, configured to determine whether or not to secrete the information of a certain recipient from other recipients and inform a third message setting unit of a determination result; and
the third message setting unit, configured to acquire the determination result, wherein if the determination result is yes, for the recipient, the parameter indicative of secreting information of the certain recipient from other recipients is set as valid; otherwise, the parameter indicative of secreting information of the certain recipient from other recipients is set as invalid.

12. The device of claim 11, **characterized in that,** after the first message setting unit sets the parameter indicative of secreting information from all recipients as valid,
the first message setting unit triggers the second message setting unit to set all the parameters indicative of secreting information of other recipients from a certain recipient as valid; and/or the first setting unit triggers the third message setting unit to set all the parameters indicative of secreting information of a certain recipient from other recipients as invalid.

13. The device of claim 11, **characterized in that**, the second message setting unit and/or the third message setting unit places the parameter in a prefix or postfix of the address of the recipient in the message, or places the address of the recipient whose parameter is valid in a defined area in the message.

14. The device of claim 10, 11, 12 or 13, **characterized in that,** the device further comprises an interface for acquiring display property parameter that has been inputted.

15. A method for implementing group messaging, **characterized in** comprising:
receiving, by a network side device, a message containing a plurality of recipients;
determining, by the network side device, a display policy for each recipient based on a display attribute parameter;
modifying recipient information in the received message, wherein the display attribute parameter indicates the display policy regarding how each recipient displays information of other recipients; and
sending the modified message to each recipient.

16. The method of claim 15, **characterized in that**, the display attribute parameter comprises at least one of a parameter indicative of secreting information from all recipients, a parameter indicative of secreting information of other recipients from a certain recipient, and a parameter indicative of secreting information of a certain recipient from other recipients.

17. The method of claim 16, **characterized in that,** modifying recipient information in the received message comprises:
deleting or secreting information of other recipients in the message relating to each recipient if the parameter indicative of secreting information from all recipients is determined to be valid;
and/or
deleting or secreting information of other recipients in the message relating to the recipient if the parameter indicative of secreting information of other recipients from a certain recipient is determined to be valid;
and/or
deleting or secreting information of a certain recipient in the messages relating to other recipients if the parameter indicative of secreting information of the certain recipient from other recipients is determined to be valid.

18. The method of claim 17, **characterized in that**, the step of deleting or secreting information of the certain recipient in the messages relating to other recipients after the parameter indicative of secreting information of the certain recipient from other recipients is determined to be valid comprises:
reserving information of a recipient in the message relating to recipients whose parameters indicative of secreting a certain recipient from other recipients are valid and deleting or secreting information of a recipient in the message sent to the recipients whose parameters indicative of secreting a certain recipient from other recipients are invalid, if the recipient whose parameter is valid is accessible to information of all the other recipients;
or,
deleting or secreting information of a recipient in the all messages relating to the other recipients if the recipient whose parameter is valid is only accessible to information of the recipients whose parameter is not valid.

19. The method of claim 16 or 17, **characterized in that,** if the display attribute parameter is indicative of secreting information of other recipients from a certain recipient, the step of sending the message to the other recipients by the network side comprises:
secreting the information of the certain recipient from other recipients or not sending the information of the certain recipient to other recipients; or
sending the information of the certain recipient to other recipients.

20. The method of claim 19, **characterized in that,** when sending the information of the certain recipient to other recipients, the method further comprises:
other recipients directly replying to the certain recipient; or
other recipients being not able to directly reply to the certain recipient.

21. The method of claim 15, **characterized in** further comprises:
acquiring, by the network side device, the display attribute parameter information from the message containing information of a plurality of recipients; or
acquiring, by the network side device, the display attribute parameter information from stored information.

22. A network device, **characterized in** comprising:
a message receiving unit, configured to receive a message containing information of a plurality of recipients;
a recipient information modification unit, configured to determine a display policy for each recipient based on a display attribute parameter, and modify recipient information in the received message, wherein the display attribute parameter is used to indicate the display policy regarding how each recipient displays information of other recipients; and
a message delivering unit, configured to send the modified message to each recipient.

23. The device of claim 22, **characterized in** further comprising a determination unit, configured to determine if the display attribute parameter information is contained in the received message and trigger the recipient information modification unit after the display attribute parameter information is determined as to be contained in the received message.

24. The device of claim 22, **characterized in** further comprises:
a storage module, configured to pre-store the display attribute parameter information, wherein the recipient information modification unit determines a display policy for each recipient based on the display attribute parameter information stored in the storage module and modifies the recipient information in the received message.

25. The device of claim 22, **characterized in that,** if the display attribute parameter comprises at least one of a parameter indicative of secreting information from all recipients, a parameter indicative of secreting information of other recipients from a certain recipient, and a parameter indicative of secreting information of a certain recipient from other recipients,
the recipient information modification unit comprises:
a first parameter identification unit, configured to identify if the parameter indicative of secreting information from all recipients is valid; if the parameter is identified to be valid, the first parameter identification unit triggers a first message modification unit; and
the first message modification unit, configured to delete or secrete information of all the other recipients in the message relating to each recipient;
and/or the recipient information modification unit comprises:
a second parameter identification unit, configured to identify if the parameter indicative of secreting information of other recipients from a certain recipient is valid; if the parameter is identified to be valid, the second parameter identification unit triggers a second message modification unit; and
the second message modification unit, configured to delete or secrete information of other recipients in the message relating to the recipient;
and/or the recipient information modification unit comprises:
a third parameter identification unit, configured to identify if the parameter indicative of secreting information of a certain recipient from other recipients is valid, if the parameter is identified to be valid, the third parameter identification unit triggers a third message modification unit; and
the third message modification unit, configured to delete or secrete information of the recipient in the messages relating to other recipients.

26. The device of claim 25, **characterized in that**, the recipient information modification unit further comprises a unit for identifying other parameter, configured to identify recipients from the other recipients, whose parameters indicative of secreting information of a certain recipient from other recipients are valid, and configured to trigger the third message modification unit to delete or secrete or reserve the information of the recipient in the message after the third parameter identification unit identifies the parameter to be valid.

27. The device of any one of claims 22 to 26, **characterized in that,** the network device is a Short Message Service Center, an IP Short Message Gateway, a Service Call Session Control Function and a converged IP Message CPM server or a newly added network entity.
